# FASCICULE DE BREVET EUROPEEN

(11) **EP 1 834 206 B1**
(45) Date de publication et mention de la délivrance du brevet: **25.08.2021**
(21) Numéro de dépôt: 05826550.5
(22) Date de dépôt: 19.12.2005
(51) Int. Cl.: G02C 7/02, G02C 7/06

(54) **VERRE OPHTALMIQUE PROGRESSIF ET PROCEDE DE FABRICATION D'UN TEL VERRE**
PROGRESSIVE OPHTHALMISCHE LINSE UND VERFAHREN ZUR HERSTELLUNG EINER DERARTIGEN LINSE
PROGRESSIVE OPHTHALMIC LENS AND METHOD OF PRODUCING ONE SUCH LENS

(30) Priorité: 04.01.2005 FR 0500038
(43) Date de publication de la demande: 19.09.2007
(73) Titulaire: Essilor International, 94220 Charenton-le-Pont (FR)
(72) Inventeur: BOURDONCLE, Bernard, ESSILOR INTERNATIONAL, F-94220 Charenton Le Pont (FR); DECRETON, Bruno, ESSILOR INTERNATIONAL, F-94220 Charenton Le Pont (FR); GUILLOUX, Cyril, ESSILOR INTERNATIONAL, F-94220 Charenton Le Pont (FR)
(74) Mandataire: Plasseraud IP
(86) Numéro de dépôt international: PCT/FR2005/003184
(87) Numéro de publication internationale: WO 2006/072683

(56) Documents cités:
- EP-A- 0 562 336
- WO-A-2004/034095
- WO-A1-01/62139
- DE-A1- 3 331 757
- DE-A1- 10 252 814
- US-A- 5 861 934
- US-A- 6 123 422

## Description

La présente invention concerne un verre ophtalmique progressif, ainsi qu'un procédé de fabrication d'un tel verre.

De façon usuelle, un verre ophtalmique comporte une correction visuelle qui est déterminée par une prescription établie pour le porteur du verre. Une telle prescription indique notamment une valeur de puissance optique et une valeur d'astigmatisme adaptées à la correction d'un porteur pour la vision de loin. Ces valeurs sont usuellement obtenues en combinant la face antérieure du verre avec une face postérieure généralement sphérique ou sphéro-torique. Pour un verre progressif, l'une au moins des deux faces du verre présente des variations de sphère et de cylindre, dont résultent des variations de puissance optique et d'astigmatisme entre des direction différentes d'observation au travers du verre. On appelle design un type de variations de la puissance optique et de l'astigmatisme du verre. En particulier, la différence de puissance optique entre les deux points dédiés à la vision de loin et à la vision de près s'appelle l'addition, et sa valeur doit correspondre aussi à la valeur prescrite à un porteur presbyte.

Couramment, un verre progressif est fabriqué en deux étapes successives. La première étape consiste à fabriquer un verre semi-fini, dont la face antérieure présente des variations de sphère et de cylindre définies initialement pour correspondre au design voulu. Elle est exécutée en usine, par exemple par moulage ou injection. Les verres semi-finis sont répartis en plusieurs modèles, qui peuvent différer, notamment, par la base, par la répartition des sphère et cylindre de la face antérieure, ou par l'addition. La base est la sphère au point du verre correspondant à la vision de loin. La distance entre les points de vision de près et de loin, les largeurs respectives des zones du verre correspondant à la vision de près et à la vision de loin, l'indice de réfraction du matériau transparent qui constitue le verre semi-fini, etc, peuvent aussi différer d'un modèle à l'autre. Chaque combinaison de ces caractéristiques correspond à un modèle différent de verre semi-fini.

La seconde étape est réalisée dans des laboratoires situés entre les usines et les centres de vente au détail, au sein de la chaîne de distribution des verres ophtalmiques. Elle consiste à usiner en reprise une sphère ou une surface sphéro-torique sur la face postérieure des verres, pour que chaque verre corresponde à la prescription d'un porteur.

Or aujourd'hui, une tendance apparaît, selon laquelle le design des verres progressifs est personnalisé en fonction de caractéristiques supplémentaires du porteur, autres que les caractéristiques usuelles de prescription. De telles caractéristiques supplémentaires peuvent concerner, notamment, la position de la tête du porteur et celle de ses yeux pour une situation de vision de loin et une situation de vision de près. Le verre progressif peut alors, par exemple, être sélectionné de sorte que les points de vision de loin et de vision de près sont situés à des endroits du verre adaptés par rapport aux positions de tête et d'yeux du porteur.

Dans l'organisation de la fabrication des verres progressifs décrite plus haut, la prise en compte de caractéristiques individuelles des porteurs pour le design des verres nécessite de multiplier les modèles de verres semi-finis. Les séries de verres semi-finis de chaque modèle qui sont fabriquées en usine sont alors moins grandes. Leur prix de revient est plus élevé en conséquence. En outre, une gestion complexe des stocks en résulte au niveau des laboratoires, puisque ceux-ci doivent disposer de réserves pour un grand nombre de modèles de verres semi-finis.

Pour éviter une telle multiplication des modèles de verres semi-finis, une nouvelle organisation de la chaîne de fabrication des verres ophtalmiques progressifs a été proposée. Selon cette nouvelle organisation, le design du verre progressif est apporté par la face postérieure du verre. Les verres semi-finis possèdent alors une face antérieure sphérique, et la face postérieure est usinée en reprise conformément à la prescription et au design qui est adapté aux caractéristiques individuelles déterminées pour chaque porteur. Une telle organisation est particulièrement flexible, étant donné qu'aucune caractéristique individuelle du porteur n'intervient plus dans la sélection du modèle de verre semi-fini. En particulier, un nombre réduit de modèles de verres semi-finis est suffisant pour obtenir toutes les configurations de verres finis.

Mais, dans ce cas, la face postérieure du verre possède une forme complexe. En effet, le design et la correction résultent ensemble de cette forme. L'usinage en reprise de la face postérieure du verre semi-fini nécessite alors d'équiper les laboratoires en machines capables de réaliser de telles formes. De telles machines, qui correspondent au procédé appelé «free-form», sont elles-mêmes complexes, et donc onéreuses. Pour ces raisons, l'usinage en reprise des faces postérieures des verres doit être regroupé dans un nombre restreint de laboratoires spécialisés, ce qui va à l'encontre d'une personnalisation des verres déplacée en aval dans la chaîne de fabrication et de distribution.

Le document US 5,444,503, ou son équivalent EP 0 562 336, décrit un verre ophtalmique progressif, dont la face antérieure peut être une surface progressive, et dont la face postérieure est formée non seulement pour obtenir la correction prescrite du porteur, mais aussi pour tenir compte de conditions individuelles d'utilisation du verre. Parmi ces conditions individuelles d'utilisation figurent la profondeur de l'œil, la distance de vision, l'inclinaison du verre devant l'œil en fonction de la monture avec laquelle le verre est assemblé, et la forme de la monture. La face postérieure du verre peut alors aussi être asphérique et/ou atorique. Une personnalisation du verre est ainsi effectuée, en plus de la correction d'amétropie, sans multiplier le nombre de modèles de verres semi-finis. Mais une telle personnalisation ne prend en compte que des caractéristiques physiques de l'œil et/ou de la monture. Or, de telles caractéristiques sont insuffisantes pour procurer une amélioration du confort du porteur dans de nombreuses conditions d'utilisation du verre.

Un but de la présente invention est donc de combiner une fabrication économique des verres progressifs avec une personnalisation du design de chaque verre en fonction d'au moins une caractéristique individuelle du porteur autre que sa prescription, en procurant une amélioration du confort du porteur dans un grand nombre de conditions d'utilisation.

Pour cela, l'invention propose un procédé de réalisation d'un verre ophtalmique progressif tel que définit dans la revendication 1. Le verre ophtalmique progressif comprend une face antérieure, une face postérieure et un milieu intermédiaire produisant des variations de puissance optique et d'astigmatisme lors d'une utilisation dudit verre par un porteur, dans lequel lesdites variations comportent :
- une première contribution résultant de variations de sphère et de cylindre de la face antérieure du verre ; et
- une seconde contribution résultant de variations d'au moins une grandeur physique du verre distincte de la sphère et du cylindre de la face antérieure.

En outre, des valeurs de la grandeur physique en des points différents du verre sont adaptées de sorte que la seconde contribution réalise une personnalisation des variations de puissance optique et d'astigmatisme du verre en fonction d'au moins une caractéristique comportementale d'un porteur dudit verre.

La caractéristique comportementale en fonction de laquelle les valeurs de la grandeur physique sont adaptées concerne une ou plusieurs attitudes et/ou mouvements habituels du porteur. Il s'agit d'une amplitude de mouvements oculaires horizontaux par rapport à une rotation de la tête du porteur, lorsque le porteur balaye horizontalement un champ de vision. Cette caractéristique est mesurée sur le porteur en utilisant une instrumentation appropriée. Une telle caractéristique comportementale n'est pas, par nature, une caractéristique optique ni physique des yeux du porteur, ni une caractéristique liée à une monture avec laquelle le verre est destiné à être assemblé.

Par ailleurs, de façon connue, l'utilisation du verre par le porteur correspond à des directions variables d'observation au travers du verre. Chaque direction d'observation est repérée par deux angles, respectivement par rapport à un plan horizontal et par rapport à un plan vertical. Un rayon lumineux provenant d'une direction d'observation donnée coupe chaque face du verre en des points d'intersection respectifs, et passe par un centre de rotation de l'œil supposé fixe. Les points d'intersection du rayon lumineux avec chaque face du verre sont déterminés selon les principes de réfraction optique. Les valeurs de puissance optique et d'astigmatisme du verre progressif pour une direction donnée résultent alors des valeurs de la sphère et du cylindre de chaque face du verre aux points d'intersection du rayon optique, de la valeur d'indice de réfraction du milieu intermédiaire, ainsi que de son éventuel gradient.

Ainsi, selon l'invention, les variations de puissance optique et d'astigmatisme du verre progressif sont obtenues pour partie par la face antérieure, et pour partie au moyen d'une grandeur physique du verre qui est ajustée pour personnaliser le verre en fonction du porteur. La forme de la face antérieure du verre est donc indépendante de la personnalisation réalisée au moyen de la grandeur physique. Des verres progressifs personnalisés différemment, en ce qui concerne le design, peuvent donc être obtenus à partir de verres semi-finis identiques. Ainsi, un nombre réduit de modèles de verres semi-finis est suffisant pour répondre à tous les besoins de verres progressifs d'une population. Les verres semi-finis peuvent alors être fabriqués en grandes séries, de façon économique.

Selon un mode de réalisation préféré de l'invention, la seconde contribution est inférieure à la première contribution, en valeurs absolues, pour la variation de puissance optique présente entre un point de vision de loin et un point de vision de près du verre. Autrement dit, la personnalisation du verre qui est effectuée au moyen de la grandeur physique modifie peu l'addition du verre progressif. L'ajustement du design qui correspond à cette personnalisation est alors limité, si bien qu'il peut être facilement réalisé en reprise, sans nécessiter d'équipements très spécialisés. Eventuellement, pour la variation de puissance optique présente entre le point de vision de loin et le point de vision de près du verre, la seconde contribution est sensiblement nulle. L'addition du verre progressif ne résulte alors que de la première contribution aux variations de puissance optique : elle est uniquement déterminée par la face antérieure du verre.

Selon une caractéristique supplémentaire de l'invention, la grandeur physique du verre, par laquelle les variations de puissance optique et d'astigmatisme du verre sont personnalisées, est de l'une des natures suivantes :
- une sphère et un cylindre de la face postérieure du verre, auquel cas la grandeur physique est modulée lors d'un usinage en reprise de la face postérieure du verre ;
- un indice de réfraction d'une couche sensiblement transparente comprise dans le verre. Cette couche peut être constituée d'un matériau d'indice de réfraction ajustable par irradiation. Dans ce cas, la grandeur physique est modulée en irradiant sélectivement de façon variable des portions différentes de la couche ; ou
- un indice de réfraction du milieu intermédiaire situé entre les faces antérieure et postérieure du verre. Ce milieu intermédiaire peut être constitué d'un matériau d'indice de réfraction ajustable par irradiation. Dans ce cas, la grandeur physique est modulée en irradiant sélectivement de façon variable des portions différentes du milieu intermédiaire.

Selon une autre caractéristique supplémentaire de l'invention, la puissance optique de prescription et l'astigmatisme de prescription, qui correspondent à la correction d'amétropie, résultent de valeurs d'une autre grandeur physique du verre en des points différents de celui-ci. Cette autre grandeur physique est distincte de la sphère et du cylindre de la face antérieure, ainsi que de la grandeur physique à l'origine de la seconde contribution aux variations de puissance optique et d'astigmatisme du verre. De même que cette dernière, ladite autre grandeur physique du verre peut comprendre une sphère et un cylindre de la face postérieure du verre, un indice de réfraction d'une couche sensiblement transparente comprise dans le verre, ou un indice de réfraction du milieu intermédiaire. Selon la nature de ladite autre grandeur, des valeurs de celle-ci en des points différents du verre peuvent être fixées lors d'un usinage en reprise de la face postérieure du verre, ou lors d'une irradiation sélective de portions différentes de la couche ou du milieu intermédiaire, lorsque l'un de ceux-ci est constitué d'un matériau d'indice de réfraction ajustable par irradiation.

Différentes personnalisations du design du verre progressif en fonction de caractéristiques comportementales du porteur peuvent ainsi être réalisées. Parmi ces adaptations, on peut citer notamment :
- une modification d'une largeur d'un champ de vision de près et/ou d'un champ de vision de loin du verre, par rapport à un champ fictif de vision de près et/ou un champ fictif de vision de loin, respectivement, qui résulterait seulement des variations de la sphère et du cylindre de la face antérieure du verre ;
- une modification d'une valeur maximale d'astigmatisme atteinte dans des parties latérales du verre, par rapport à une valeur maximale fictive d'astigmatisme dans lesdites parties latérales qui résulterait seulement des variations de la sphère et du cylindre de la face antérieure du verre ;
- un déplacement de la position d'un point situé dans les parties latérales du verre auquel la valeur maximale d'astigmatisme est atteinte, par rapport à une position fictive dudit point qui résulterait seulement des variations de la sphère et du cylindre de la face antérieure du verre ;
- une modification d'une progression de la puissance optique du verre le long d'une ligne méridienne entre le point de vision de loin et le point de vision de près du verre, par rapport à une progression fictive de la puissance optique entre lesdits points qui résulterait seulement des variations de la sphère et du cylindre de la face antérieure du verre ; et
- un déplacement latéral du point de vision de près du verre, par rapport à une position fictive dudit point qui résulterait seulement des variations de la sphère et du cylindre de la face antérieure du verre.

L'invention propose ainsi un procédé de réalisation d'un verre ophtalmique progressif qui comprend une face antérieure, une face postérieure et un milieu intermédiaire. Le procédé comprend les étapes suivantes :
- réaliser un verre semi-fini dans lequel la face antérieure possède des variations de sphère et de cylindre pour obtenir une première contribution à des variations de puissance optique et d'astigmatisme du verre lors d'une utilisation dudit verre par un porteur ;
- mesurer au moins une caractéristique comportementale du porteur du verre ;
- déterminer des valeurs d'une grandeur physique du verre distincte de la sphère et du cylindre de la face antérieure, de sorte qu'une seconde contribution aux variations de puissance optique et d'astigmatisme du verre résulte de variations de ladite grandeur physique entre des points différents du verre, ladite seconde contribution réalisant une personnalisation des variations de puissance optique et d'astigmatisme du verre en fonction de la caractéristique comportementale mesurée ;
- moduler la grandeur physique pour obtenir ladite seconde contribution ; et
- déterminer des valeurs de l'autre grandeur physique en des points différents du verre pour conférer au verre la puissance optique de prescription et l'astigmatisme de prescription.

Le verre semi-fini peut être fabriqué en usine, la caractéristique comportementale du porteur peut être mesurée chez l'opticien, et la grandeur physique de chaque verre peut être modulée dans un laboratoire intermédiaire entre l'usine et le centre de vente au détail du verre. Pour une telle organisation de la fabrication des verres progressifs, le résultat de la mesure comportementale effectuée sur le porteur chez l'opticien est communiqué au laboratoire, afin que celui-ci détermine les valeurs de la grandeur physique qui doivent être générées en chaque point du verre. Alternativement, la modulation de la grandeur physique peut être réalisée directement dans le centre de vente au détail, si ce centre est équipé en appareils capables de réaliser cette modulation.

D'autres particularités et avantages de la présente invention apparaîtront dans la description ci-après d'exemples de réalisation non limitatifs, en référence aux dessins annexés, dans lesquels :
- les figures 1a et 1b sont respectivement une coupe et une vue en plan d'un verre ophtalmique progressif ;
- les figures 2a et 2b sont des cartographies des variations de sphère et de cylindre d'une face antérieure d'un verre selon les figures 1a et 1b ;
- les figures 3a et 3b sont des cartographies de puissance optique et d'astigmatisme d'un verre ayant une face antérieure conforme aux figures 2a et 2b et une face arrière sphérique ;
- les figures 4a et 4b sont des cartographies de sphère et de cylindre d'une face postérieure de verre usinée selon un premier mode de réalisation de l'invention ;
- les figures 5a et 5b représentent des variations de sphère et de courbures le long de la ligne méridienne principale d'un verre, respectivement pour une face antérieure du verre correspondant aux figures 2a et 2b, et pour une face postérieure du verre correspondant aux figures 4a et 4b, ;
- les figures 6a et 6b sont des cartographies de puissance optique et d'astigmatisme d'un verre ayant une face antérieure conforme aux figures 2a et 2b, et une face postérieure conforme aux figures 4a et 4b ;
- la figure 7a représente des variations de puissance optique et d'astigmatisme d'un verre correspondant aux figures 3a et 3b, le long de la ligne méridienne principale ;
- la figure 7b représente des variations de puissance optique et d'astigmatisme d'un verre correspondant aux figures 6a et 6b, le long de la ligne méridienne principale ; et
- les figures 8a-8c sont des coupes respectives de verres ophtalmiques progressifs selon des modes de réalisation alternatifs de l'invention.

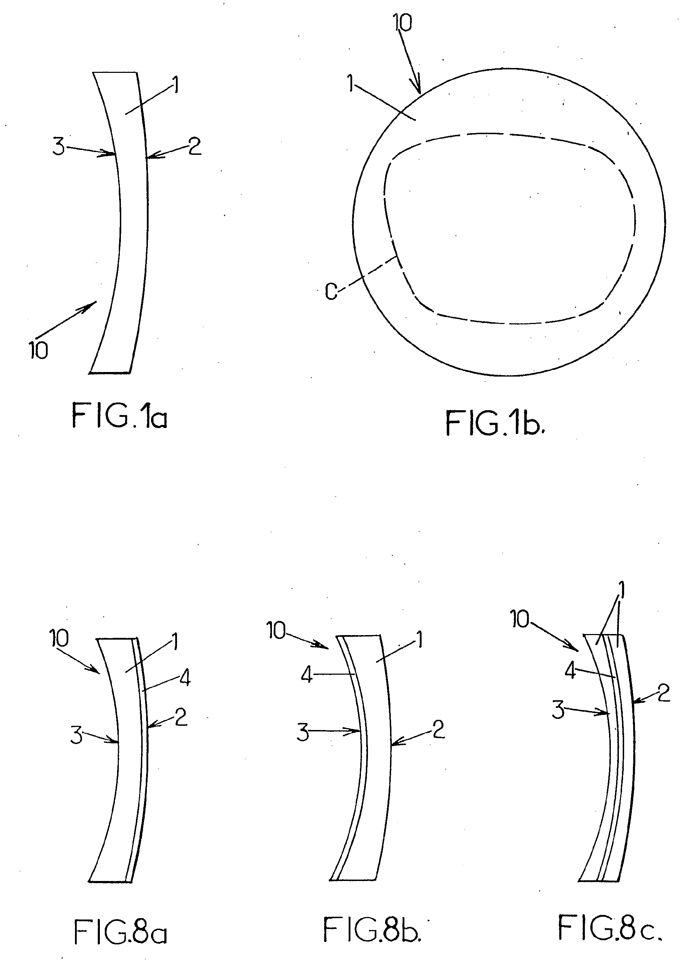

Conformément à la figure 1a, un verre ophtalmique 10 est constitué d'un milieu intermédiaire 1, qui est limité par une face antérieure 2 et par une face postérieure 3. Le milieu 1 est transparent, et peut être en matériau minéral ou organique, caractérisé par une valeur d'indice de réfraction. Les caractéristiques optiques du verre 10 résultent de la combinaison de cette valeur d'indice de réfraction avec les formes des faces 2 et 3. De façon connue, un verre prêt à être assemblé avec une monture de lunettes est obtenu par détourage du verre 10 selon un contour C qui correspond à la forme de la monture (figure 1b).

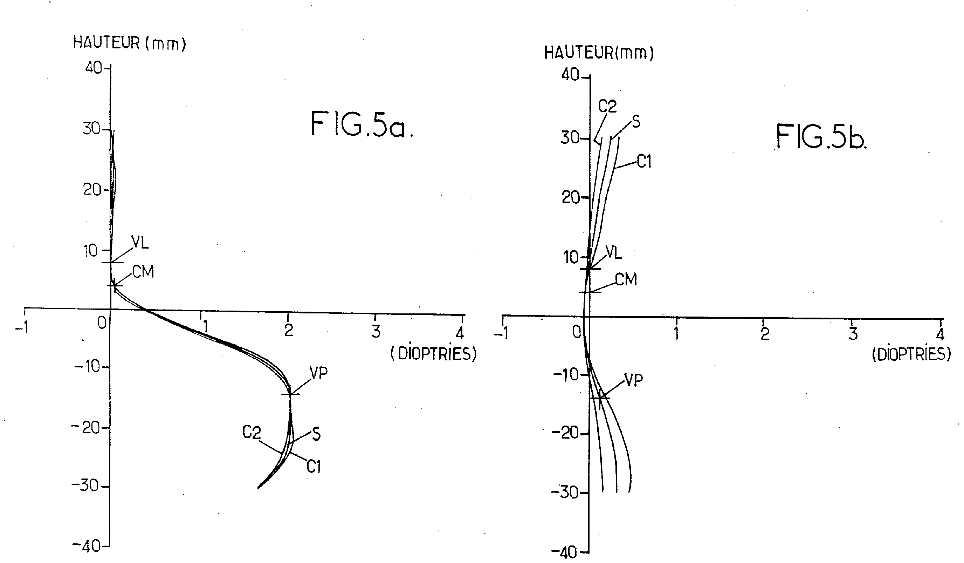

Chaque face 2, 3 du verre peut être définie géométriquement par des valeurs de sphère moyenne et de cylindre pour chaque point de cette face. Ces valeurs de sphère moyenne et de cylindre sont bien connues de l'Homme du métier, et l'on pourra se reporter à des documents publiés pour obtenir leurs expressions mathématiques. De façon simplifiée, la sphère moyenne, notée S sur les figures 5a et 5b et exprimée en dioptries, correspond à la courbure moyenne d'une face en un point de celle-ci. Le cylindre correspond à un écart entre les deux courbures, notées respectivement C1 et C2, d'un tore tangent à la face du verre en un point donné de celle-ci. Par souci de clarté, la sphère moyenne est désignée dans ce document par sphère seulement.

Le verre 10 est obtenu à partir d'un verre semi-fini, désigné dans la suite par semi-fini, dont la face antérieure possède une forme définitive. Autrement dit, les valeurs de sphère et de cylindre de la face antérieure 2 ne sont pas modifiées lorsque le verre 10 est réalisé en reprise à partir du semi-fini. Dans l'exemple qui sera décrit en détail ci-dessous, le verre 10 est obtenu par usinage de la face postérieure 3 du semi-fini, de façon à conférer à celle-ci des valeurs de sphère et de cylindre adaptées pour obtenir une fonction optique déterminée.

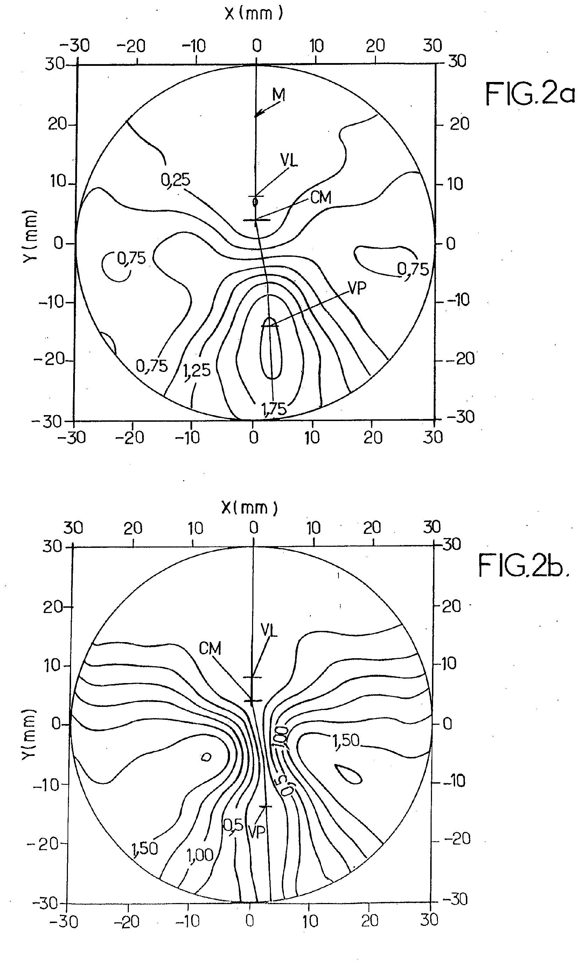

Les figures 2a et 2b sont des cartographies respectives des valeurs de sphère et de cylindre de la face antérieure 2 du semi-fini. Cette face est limitée par le bord circulaire du semi-fini, et chaque point de celle-ci est repéré par deux coordonnées rectangulaires, respectivement notées X et Y, et exprimées en millimètres (mm). Les lignes indiquées sur la figure 2a sont des lignes isosphères, qui relient des points de la face 2 correspondant à une même valeur de sphère. Cette valeur est indiquée en dioptries pour certaines de ces lignes. De façon similaire, les lignes indiquées sur la figure 2b sont des lignes isocylindres, qui relient des points de la face 2 correspondant à une même valeur de cylindre.

Trois points particuliers, respectivement notés CM, VL et VP sont repérés sur ces cartographies. Le point CM, appelé croix de montage, est le point du verre 10 qui doit être placé en face du centre de l'œil du porteur auquel est destiné le verre 10. Le point VL est le centre d'une zone du verre utilisée pour la vision de loin. De même, le point VP est le centre d'une zone du verre utilisée pour la vision de près. VL est situé sur une ligne verticale centrale de la face 2 passant par CM (correspondant à X=0), et VP est décalé latéralement (parallèlement à l'axe X) par rapport à CM et VL. Le sens du décalage latéral de VP est inversé entre un verre droit et un verre gauche. Le verre 10 correspondant aux figures est un verre pour œil droit. Une ligne M, appelée ligne méridienne principale, relie les points VL, CM et VP. Elle correspond au balayage de l'œil du porteur lorsque celui-ci observe successivement des objets situés devant de lui à des hauteurs et à des distances variables.

De façon usuelle, et rappelée ici à titre de référence comparative, la face postérieure 3 du semi-fini est usinée en reprise selon une prescription du porteur, pour obtenir le verre 10. La prescription indique une valeur de puissance optique, une valeur d'addition et une valeur d'astigmatisme. Cette dernière est composée, de façon connue, d'une donnée d'amplitude d'astigmatisme et d'une donnée angulaire, qui repère l'orientation du tore de correction parallèlement au verre. L'usinage courant confère à la face 3 des valeurs de sphère et de cylindre qui sont uniformes. Autrement dit, la face 3 n'est pas progressive. Les variations de la puissance optique du verre 10, qui comprennent l'addition, et les variations d'astigmatisme ne résultent donc que des caractéristiques géométriques de la face antérieure 2 du verre.

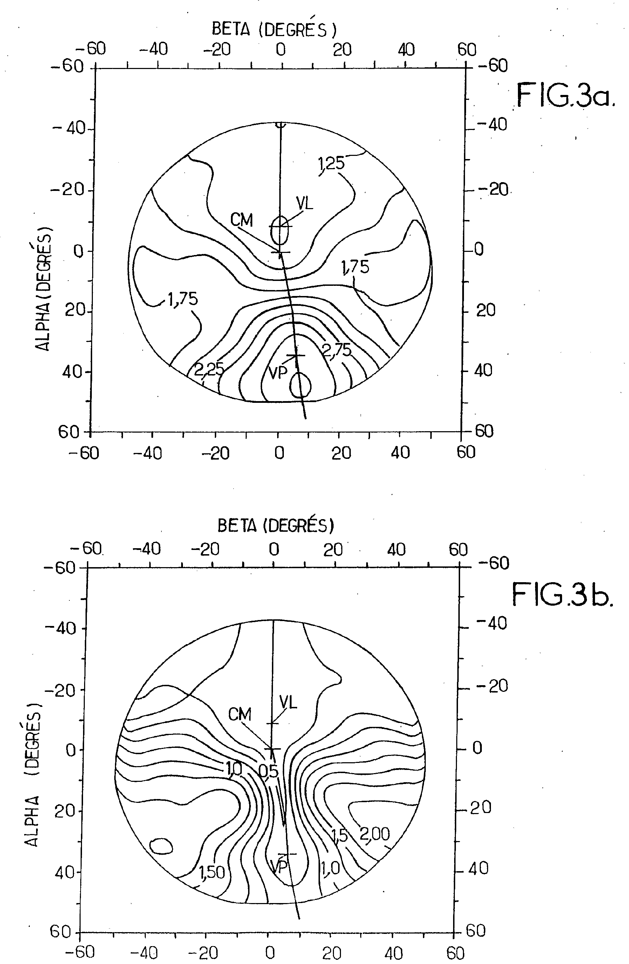

Les figures 3a et 3b illustrent les caractéristiques optiques d'un verre 10 dont la face postérieure 3 présente des valeurs uniformes de sphère et de cylindre. Pour l'exemple considéré, l'indice de réfraction du milieu intermédiaire 1 du verre 10 est 1,665. Les figures 3a et 3b sont des cartographies respectives des valeurs de puissance optique et d'astigmatisme du verre 10. Chaque direction d'observation à travers le verre 10 est repérée par deux coordonnées angulaires exprimées en degrés : alpha repère la hauteur d'observation par rapport à un plan horizontal, et bêta repère la rotation de l'œil dans ce plan horizontal. L'origine de ce système de coordonnées angulaires (alpha=0 ; bêta=0) correspond au point CM du verre 10. Les directions qui correspondent respectivement aux points VL et VP sont aussi indiquées sur ces cartographies. Les lignes indiquées sur la figure 3a sont des lignes d'isopuissance, qui relient des directions d'observation au travers du verre 10 qui correspondent à une même valeur de puissance optique. Cette valeur est indiquée en dioptries pour certaines de ces lignes. Pour l'exemple considéré, la puissance de la correction visuelle est de 3,20 dioptries en vision de près (point VP), et la différence de puissance optique du verre 10 entre les directions d'observation qui correspondent aux points VP et VL est de 2,21 dioptries (i.e. valeur d'addition). De façon similaire, les lignes indiquées sur la figure 3b sont des lignes d'isoastigmatisme, qui relient des directions d'observation au travers du verre 10 qui correspondent à une même valeur d'astigmatisme. Il est précisé que les valeurs d'astigmatisme indiquées sur la figure 3b correspondent aux valeurs réelles auxquelles a été soustraite la valeur prescrite d'astigmatisme. Pour cette raison, les valeurs indiquées sont appelées valeurs d'astigmatisme résultant, et sont presque nulles pour les directions d'observation correspondant aux points VL et VP. La valeur résiduelle de l'astigmatisme résultant qui est présente éventuellement pour ces deux directions d'observation est de nature sphérique.

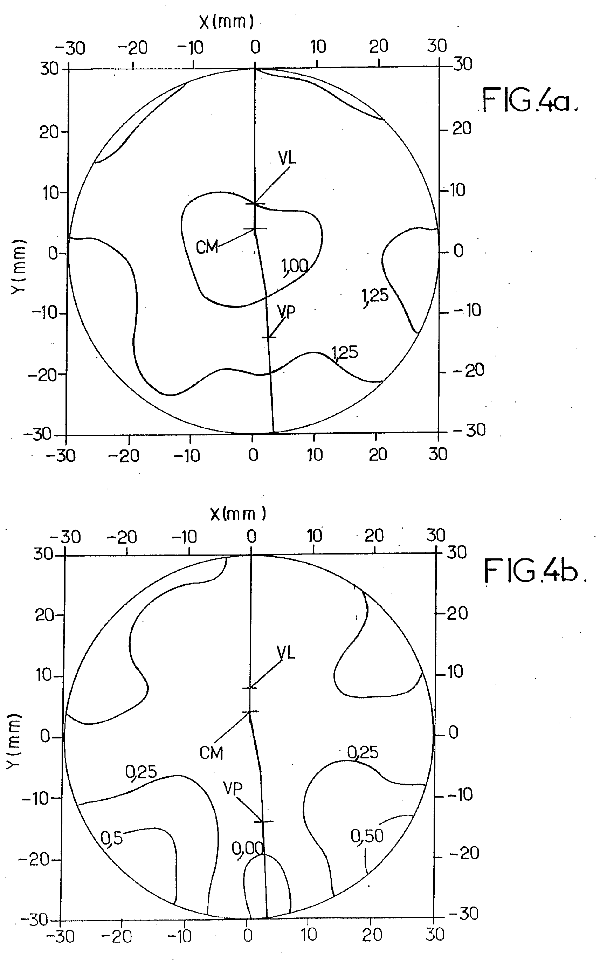

Selon le mode particulier de mise en œuvre de l'invention décrit ici, la face postérieure 3 du semi-fini est usinée en reprise de façon à lui conférer une sphère et un cylindre qui varient entre des points différents de cette face. Ainsi, contrairement à la méthode usuelle de réalisation des verres progressifs qui vient d'être rappelée, la face postérieure 3 du verre contribue à la variation des caractéristiques optiques du verre 10 qui est obtenu à partir du semi-fini. Les figures 4a et 4b correspondent respectivement aux figures 2a et 2b, pour la face postérieure 3 du verre 10. Ainsi, la figure 4a indique la valeur de sphère à chaque point de la face postérieure 3. De façon analogue, la figure 4b indique la valeur de cylindre à chaque point de la face 3. L'espacement entre les lignes isosphères de la figure 4a (respectivement isocylindres de la figure 4b), qui est supérieur aux espacements visibles sur la figure 2a (resp. 2b), indique que la face postérieure 3 du verre 10 présente des variations de sphère (resp. de cylindre) inférieures à celles de la face antérieure 2. Pour cette raison, la face 3 peut être usinée en utilisant une machine relativement simple, qui a notamment un nombre réduit d'axes de déplacement d'outil. Une telle machine est moins onéreuse et plus facile à utiliser. Elle peut donc être installée dans un grand nombre de sites à proximité des centres de vente au détail des verres, ou même à l'intérieur de ceux-ci.

La figure 5b illustre les variations de sphère S et de courbures C1, C2 de la face postérieure 3 le long de la ligne méridienne principale M. L'axe vertical repère le déplacement le long de cette ligne, mesuré en millimètres, et l'axe horizontal repère les valeurs respectives de S, C1 et C2, exprimées en dioptries. Les valeurs de sphère indiquées sur cette figure correspondent aux valeurs de sphère réelles de la face 3, auxquelles a été soustraite la valeur de sphère correspondant à la prescription de puissance optique (1,05 dioptrie dans l'exemple considéré). D'après cette figure, la face postérieure 3 présente des valeurs de sphère S sensiblement identiques aux points VP et VL.

A titre de comparaison avec la figure 5b, la figure 5a illustre les variations de sphère S et de courbures C1, C2 de la face antérieure 2 le long de la ligne méridienne principale M, pour un verre correspondant aux figures 2a et 2b. Les variations de sphère S et de courbures C1, C2 de la face postérieure 3 sont donc très inférieures aux variations correspondantes pour la face antérieure 2.

Comme précédemment, la puissance optique et l'astigmatisme du verre 10 résultent chacun des formes des deux faces 2 et 3, et de l'indice de réfraction du milieu intermédiaire 1. Mais, étant donné que la face 3 présente aussi des variations de sphère et de cylindre, les variations de puissance optique et d'astigmatisme du verre 10 résultent de la combinaison des variations de sphère et de cylindre des deux faces 2 et 3. Autrement dit, les variations de sphère et de cylindre de la face antérieure 2, caractérisées par les figures 2a et 2b, créent une première contribution à la variation de la puissance optique du verre 10 qui est présente entre différentes directions d'observation au travers de celui-ci. Elles créent aussi une première contribution à la variation d'astigmatisme du verre 10 qui est présente simultanément entre ces directions d'observation. De même, les variations de sphère et de cylindre de la face postérieure 3 du verre 10, caractérisées par les figures 4a et 4b, créent une seconde contribution à la variation de la puissance optique du verre 10, présente entre les mêmes directions d'observation, ainsi qu'une seconde contribution à la variation d'astigmatisme du verre 10, présente entre ces directions. La variation de puissance optique du verre 10 résulte de la combinaison des première et seconde contributions à celle-ci. De même, la variation d'astigmatisme du verre 10 résulte de la combinaison des première et seconde contributions correspondantes. En première approximation, les variations de puissance optique et d'astigmatisme du verre 10 sont égales chacune à la somme orientée (c'est-à-dire en tenant compte de l'orientation locale des cylindres de chacune des contributions) des contributions respectives des deux faces 2, 3 du verre. Chaque contribution est évaluée en considérant les valeurs de sphère et de cylindre des deux faces 2, 3 aux points d'intersection de celles-ci par le rayon lumineux qui provient de la direction d'observation considérée et qui passe par le centre de rotation de l'œil.

Etant donné que les variations de sphère et de cylindre de la face 3 sont inférieures à celles de la face 2 en général, la seconde contribution (due à la face postérieure 3) à la variation de puissance optique du verre 10 est inférieure à la première contribution (due à la face antérieure 2) à cette variation de puissance optique, pour la plupart des couples de directions d'observation. De même, la seconde contribution (due à la face postérieure 3) à la variation d'astigmatisme du verre 10 est inférieure, en général, à la première contribution (due à la face antérieure 2) à cette variation d'astigmatisme.

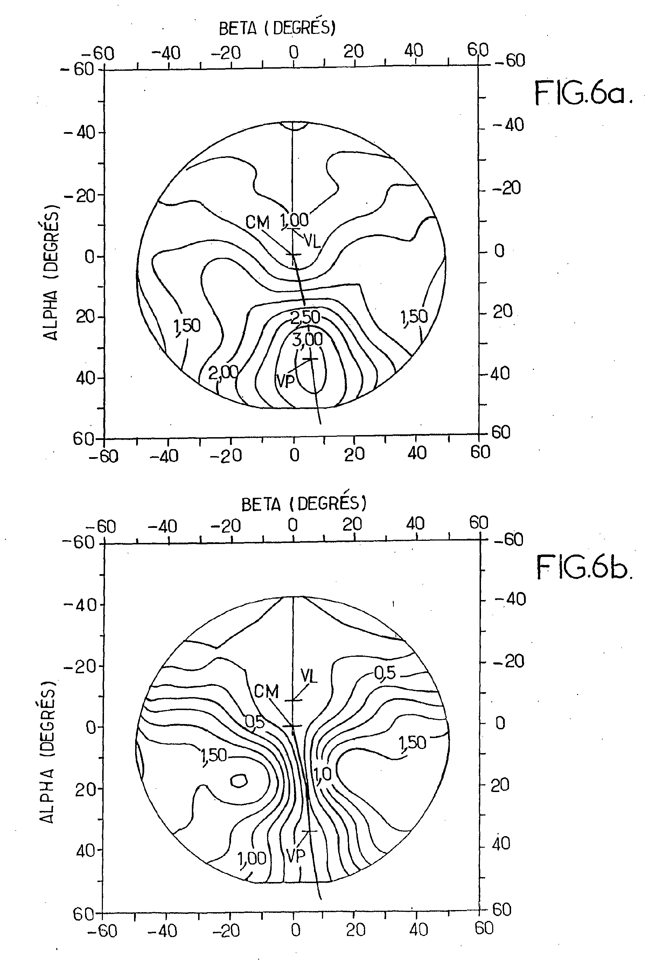

Les figures 6a et 6b correspondent respectivement aux figures 3a et 3b, lorsque la face postérieure 3 du verre 10 est usinée de façon à lui donner une forme qui correspond aux figures 4a et 4b. En comparant les figures 3a et 6a, on constate que les valeurs de puissance optique pour la direction d'observation qui correspond au point VP sont sensiblement identiques (3,20 et 3,09 dioptries respectivement pour les figures 3a et 6a). Il en est de même pour la direction d'observation qui correspond au point VL (0,99 et 1,00 dioptries respectivement pour les figures 3a et 6a). Autrement dit, la face postérieure 3 du verre 10 ne contribue presque pas à l'addition du verre. Celle-ci (2,1 dioptries environ) est donc fixée presque seulement par la face antérieure 2, étant donné que les valeurs de sphère de la face postérieure 3 aux points VP et VL sont presque égales entre elles.

En superposant les figures 3b et 6b, il apparaît que les lignes d'isoastigmatisme de chaque figure correspondant aux valeurs 0,50 à 1,25 dioptries ont une forme générale en V plus resserrée sur la figure 6b, de chaque côté de la trace correspondant à la ligne méridienne principale M à hauteur du point VL. Cela signifie que le verre 10 qui correspond aux figures 6a et 6b présente un champ de vision de loin moins large que celui du verre 10 correspondant aux figures 3a et 3b. Par contre, les aberrations d'astigmatisme résultant, principalement présentes dans des parties latérales droite et gauche du verre 10, sont réduites pour le verre 10 qui correspond aux figures 6a et 6b, par rapport aux aberrations d'astigmatisme résultant présentes dans les parties latérales du verre 10 correspondant aux figures 3a et 3b. En effet, la valeur maximale d'astigmatisme résultant visible sur la figure 6b est de l'ordre de 1,75 dioptries, alors que celle visible sur la figure 3b est supérieure à 2,00 dioptries ; de plus la position de la direction de regard pour laquelle la valeur maximale d'astigmatisme est atteinte a été modifiée.

L'usinage de la face postérieure 3 du verre conformément à l'invention, c'est-à-dire en introduisant des variations de sphère et de cylindre de cette face, a donc permis de réduire l'astigmatisme résiduel présent dans les parties latérales du verre. Simultanément, la largeur du champ de vision de loin a été réduite. Un tel verre est donc adapté à un porteur qui regarde principalement au travers d'une bande centrale verticale du verre. Un tel comportement visuel consiste à tourner principalement la tête, plutôt que les yeux, pour observer des objets situés sur les côtés.

L'invention permet donc d'obtenir un verre progressif ayant un astigmatisme résultant réduit, adapté à un porteur qui tourne la tête plutôt que les yeux, à partir d'un semi-fini qui correspond à un champ de vision de loin plus large, adapté à un porteur qui tourne les yeux plutôt que la tête pour voir dans des parties latérales de son champ de vision. Il est entendu que l'invention permet aussi d'obtenir, inversement, un verre progressif à champ de vision de loin élargi, adapté à un porteur qui tourne peu la tête, à partir d'un semi-fini correspondant à un faible astigmatisme résultant et adapté à un porteur qui tourne peu les yeux. Des verres correspondant à chacun des deux types de porteurs, qui tournent respectivement plutôt la tête ou plutôt les yeux, peuvent donc être obtenus à partir de semi-finis d'un même modèle. Autrement dit, l'invention permet d'obtenir un verre d'un design déterminé à partir d'un semi-fini de design différent. Ce changement de design opéré en reprise permet d'adapter le verre progressif en fonction du comportement du porteur, sans nécessiter un modèle différent de semi-fini.

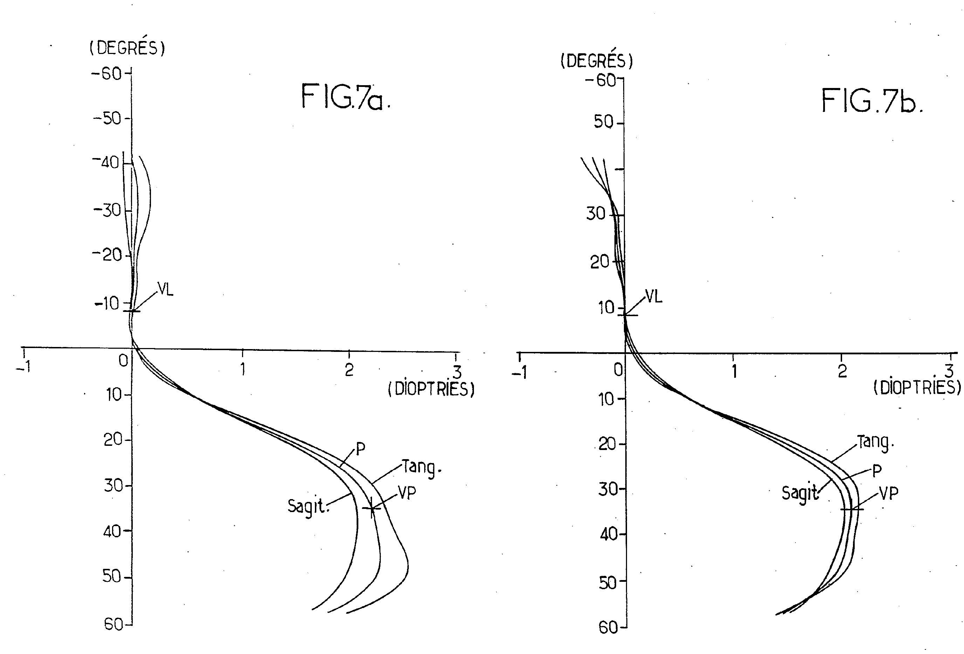

De façon générale, diverses mesures permettant de caractériser le comportement du porteur peuvent être effectuées. En particulier, l'utilisation de la zone de vision intermédiaire du verre par un porteur déterminé peut être caractérisée. Cette zone est située entre la zone de vision de loin et la zone de vision de près, et est centrée sur la ligne méridienne principale. Il est connu que le balayage vertical de la zone de vision intermédiaire par l'œil peut nécessiter une certaine durée d'adaptation du porteur. L'usinage de la face postérieure 3 selon l'invention permet aussi d'adapter la variation de la puissance optique du verre dans la zone de vision intermédiaire, en fonction du comportement du porteur. A titre d'illustration, la figure 7a représente les variations de puissance optique (notée P sur la figure) lorsque la direction d'observation varie en suivant la ligne méridienne principale d'un verre conforme aux figures 3a et 3b. De la même façon, la figure 7b illustre les variations de la puissance optique pour un verre correspondant aux figures 6a et 6b. La forme de la courbe de progression de la puissance optique entre les directions d'observation passant par les points VL et VP du verre diffère entre les figures 7a et 7b, en particulier autour de la direction passant par le point VP. Un verre conforme à la figure 7b est plus adapté qu'un verre conforme à la figure 7a, pour un porteur qui bouge verticalement les yeux en lisant, plutôt que la tête.

Les figures 7a et 7b indiquent en outre les variations des courbures tangentielle (notée Tang.) et sagittale (notée Sagit.) du verre 10. Celles-ci peuvent aussi être adaptées en fonction du porteur.

D'autres caractéristiques de verres progressifs peuvent encore être adaptées en usinant les faces postérieures des verres. En particulier, le décalage latéral du point VP par rapport au point VL, ainsi que la balance entre deux verres appariés peuvent ainsi être modifiés.

Bien que l'invention a été décrite en détail dans le cadre du design d'un verre progressif qui est personnalisé par usinage de la face postérieure du verre, il est rappelé que d'autres méthodes peuvent être utilisées pour obtenir une personnalisation similaire du verre. Parmi ces autres méthodes, on peut citer l'adaptation de l'indice de réfraction d'une couche de matériau actif incorporée au verre 10. Les figures 8a-8c illustrent des structures de verres, selon lesquelles la couche de matériau actif 4 est respectivement du côté de la face antérieure 2 du verre 10, du côté de la face postérieure 3 ou contenue dans l'épaisseur du milieu intermédiaire 1. La couche 4 est sensiblement parallèle aux faces 2 et 3 du verre 10. Une telle couche est en matériau transparent actif, dont l'indice de réfraction peut être modifié en reprise à chaque point de celle-ci. Pour certains matériaux actifs connus, une telle modification de l'indice de réfraction peut être obtenue par irradiation en utilisant un faisceau laser ou une lampe UV. Dans ce cas, la face antérieure du verre 10 est encore formée définitivement lors de la fabrication du semi-fini, et la face postérieure peut être usinée selon des valeurs de sphère et de cylindre uniformes. Les modulations de l'indice de réfraction de la couche 4 sont alors créées en reprise lors d'une étape spécifique, en variant l'intensité et/ou la durée de l'irradiation reçue entre deux points différents de la couche 4. Ces modulations réalisent la personnalisation du design du verre progressif en fonction de la caractéristique comportementale du porteur qui a été mesurée.

Une autre méthode encore consiste à réaliser le milieu intermédiaire 1 lui-même en matériau actif.

Enfin, les différentes méthodes de personnalisation d'un verre progressif peuvent être combinées entre elles. De même, la grandeur physique du verre sur laquelle est basée l'une de ces méthodes peut être utilisée pour conférer au verre le pouvoir correcteur qui correspond à la prescription, alors que la grandeur physique d'une autre de ces méthodes peut être utilisée pour personnaliser le design du verre progressif en fonction de la caractéristique comportementale du porteur.

## Revendications

1. Procédé de réalisation d'un verre ophtalmique progressif (10) comprenant une face antérieure (2), une face postérieure (3) et un milieu intermédiaire (1), le procédé comprenant les étapes suivantes :
- réaliser un verre semi-fini dans lequel la face antérieure (2) possède des variations de sphère et de cylindre pour obtenir une première contribution à des variations de puissance optique et d'astigmatisme du verre lors d'une utilisation dudit verre par un porteur ;
- mesurer au moins une caractéristique comportementale d'un porteur du verre ;
- déterminer des valeurs d'une grandeur physique du verre distincte de la sphère et du cylindre de la face antérieure, de sorte qu'une seconde contribution aux variations de puissance optique et d'astigmatisme du verre résulte de variations de ladite grandeur physique entre des points différents du verre, ladite seconde contribution réalisant une personnalisation des variations de puissance optique et d'astigmatisme du verre en fonction de la caractéristique comportementale mesurée, et
- moduler la grandeur physique pour obtenir ladite seconde contribution ;
dans lequel
la grandeur physique comprend une sphère et un cylindre de la face postérieure du verre (3), et la modulation de ladite grandeur physique est réalisée lors d'un usinage en reprise de la face postérieure du verre, ou
la grandeur physique comprend un indice de réfraction d'une couche sensiblement transparente (4) comprise dans le verre semi-fini, ladite couche étant constituée d'un matériau d'indice de réfraction ajustable par irradiation, et ladite grandeur physique est modulée en irradiant sélectivement de façon variable des portions différentes de ladite couche, ou
la grandeur physique comprend un indice de réfraction du milieu intermédiaire du verre (1), ledit milieu intermédiaire étant constitué d'un matériau d'indice de réfraction ajustable par irradiation, et ladite grandeur physique est modulée en irradiant sélectivement de façon variable des portions différentes du milieu intermédiaire,
le procédé comprenant en outre l'étape suivante :
- déterminer des valeurs d'une autre grandeur physique en des points différents du verre pour conférer au verre une puissance optique de prescription et un astigmatisme de prescription,
dans lequel
ladite autre grandeur physique comprend une sphère et un cylindre de la face postérieure du verre (3), et la modulation de ladite autre grandeur physique est réalisée lors d'un usinage en reprise de la face postérieure du verre, ou
ladite autre grandeur physique comprend un indice de réfraction d'une couche sensiblement transparente (4) comprise dans le verre, ladite couche étant constituée d'un matériau d'indice de réfraction ajustable par irradiation, et ladite autre grandeur physique est modulée en irradiant sélectivement de façon variable des portions différentes de ladite couche, ou
ladite autre grandeur physique comprend un indice de réfraction du milieu intermédiaire du verre (1), ledit milieu intermédiaire étant constitué d'un matériau d'indice de réfraction ajustable par irradiation, et ladite autre grandeur physique est modulée en irradiant sélectivement de façon variable des portions différentes du milieu intermédiaire,
**caractérisé en ce que** la caractéristique comportementale comprend une amplitude de mouvements oculaires horizontaux par rapport à une rotation de la tête du porteur, lorsque le porteur balaye horizontalement un champ de vision,
et **en ce que** ladite autre grandeur physique est distincte de la sphère et du cylindre de la face antérieure (2), ainsi que de la grandeur physique à l'origine de la seconde contribution aux variations de puissance optique et d'astigmatisme du verre.

2. Procédé selon la revendication 1, suivant lequel les valeurs de la grandeur physique sont en outre déterminées de sorte que, pour la variation de puissance optique présente entre un point de vision de loin (VL) et un point de vision de près (VP) du verre, la seconde contribution est inférieure à la première contribution, en valeurs absolues.

3. Procédé selon la revendication 2, suivant lequel les valeurs de la grandeur physique sont en outre déterminées de sorte que, pour la variation de puissance optique présente entre le point de vision de loin (VL) et le point de vision de près (VP) du verre, la seconde contribution est sensiblement nulle.

4. Procédé selon l'une quelconque des revendications 1 à 3, suivant lequel la modulation de la grandeur physique est en outre déterminée de sorte que la seconde contribution aux variations de puissance optique et d'astigmatisme du verre élargit un champ de vision de près et/ou un champ de vision de loin du verre, par rapport à champ fictif de vision de près et/ou un champ fictif de vision de loin, respectivement, résultant de la première contribution seule.

5. Procédé selon l'une quelconque des revendications 1 à 4, suivant lequel la modulation de la grandeur physique est en outre déterminée de sorte que la seconde contribution aux variations d'astigmatisme du verre modifie une valeur maximale d'astigmatisme atteinte en un point situé dans des parties latérales du verre et/ou une position dudit point, par rapport à une valeur maximale fictive d'astigmatisme et/ou une position fictive, respectivement, résultant de la première contribution seule.

6. Procédé selon l'une quelconque des revendications 1 à 5, suivant lequel la modulation de la grandeur physique est en outre déterminée de sorte que la seconde contribution à la variation de puissance optique du verre modifie une progression de la puissance optique du verre le long d'une ligne méridienne (M) entre un point de vision de loin (VL) et un point de vision de près (VP) du verre, par rapport à une progression fictive de la puissance optique entre lesdits points résultant de la première contribution seule.

7. Procédé selon l'une quelconque des revendications 1 à 6, suivant lequel la modulation de la grandeur physique est en outre déterminée de sorte que la seconde contribution aux variations de puissance optique et d'astigmatisme du verre déplace latéralement un point de vision de près du verre (VP), par rapport à une position fictive dudit point résultant de la première contribution seule.

## Patentansprüche

1. Verfahren zur Herstellung eines ophthalmischen Gleitsichtglases (10), das eine Vorderseite (2), eine Rückseite (3) und ein Zwischenmedium (1) enthält, wobei das Verfahren die folgenden Schritte enthält:
- Herstellen eines Halbfertigglases, bei dem die Vorderseite (2) Variationen von Sphäre und Zylinder besitzt, um einen ersten Beitrag zu Variationen von optischer Leistung und Astigmatismus des Glases bei einer Benutzung des Glases durch einen Träger zu erhalten;
- Messen mindestens eines Verhaltensmerkmals eines Trägers des Glases;
- Bestimmen von Werten einer physikalischen Größe des Glases anders als die Sphäre und der Zylinder der Vorderseite, so dass ein zweiter Beitrag zu den Variationen von optischer Leistung und Astigmatismus des Glases aus Variationen der physikalischen Größe zwischen unterschiedlichen Punkten des Glases resultiert, wobei der zweite Beitrag eine Personalisierung der Variationen optischer Leistung und Astigmatismus des Glases abhängig vom gemessenen Verhaltensmerkmal herstellt, und
- Modulieren der physikalischen Größe, um den zweiten Beitrag zu erhalten;
wobei
die physikalische Größe eine Sphäre und einen Zylinder der Rückseite des Glases (3) enthält, und die Modulation der physikalischen Größe bei einer maschinellen Weiterbearbeitung der Rückseite des Glases durchgeführt wird, oder
die physikalische Größe einen Brechungsindex einer im Halbfertigglas enthaltenen, im Wesentlichen transparenten Schicht (4) enthält, wobei die Schicht aus einem Material mit einem durch Bestrahlung einstellbaren Brechungsindex besteht, und die physikalische Größe durch variable selektive Bestrahlung der unterschiedlichen Abschnitte der Schicht moduliert wird, oder
die physikalische Größe einen Brechungsindex des Zwischenmediums des Glases (1) enthält, wobei das Zwischenmedium aus einem Material mit einem durch Bestrahlung einstellbaren Brechungsindex besteht, und die physikalische Größe durch variable selektive Bestrahlung verschiedener Abschnitte des Zwischenmediums moduliert wird,
wobei das Verfahren außerdem den folgenden Schritt enthält:
- Bestimmen von Werten einer anderen physikalischen Größe an verschiedenen Punkten des Glases, um dem Glas eine optische Rezeptleistung und einen Rezeptastigmatismus zu verleihen,
wobei
die andere physikalische Größe eine Sphäre und einen Zylinder der Rückseite des Glases (3) enthält, und die Modulation der anderen physikalischen Größe bei einer maschinellen Weiterbearbeitung der Rückseite des Glases durchgeführt wird, oder
die andere physikalische Größe einen Brechungsindex einer im Glas enthaltenen, im Wesentlichen transparenten Schicht (4) enthält, wobei die Schicht aus einem Material mit einem durch Bestrahlung einstellbaren Brechungsindex besteht, und die andere physikalische Größe durch variables selektives Bestrahlen der verschiedenen Abschnitte der Schicht moduliert wird, oder
die andere physikalische Größe einen Brechungsindex des Zwischenmediums des Glases (1) enthält, wobei das Zwischenmedium aus einem Material mit einem durch Bestrahlung einstellbaren Brechungsindex besteht, und die andere physikalische Größe durch variables selektives Bestrahlen der verschiedenen Abschnitte des Zwischenmediums moduliert wird,
**dadurch gekennzeichnet, dass** das Verhaltensmerkmal eine Amplitude von horizontalen Augenbewegungen bezüglich einer Drehung des Kopfes des Trägers enthält, wenn der Träger ein Sichtfeld horizontal abtastet,
und dass die andere physikalische Größe sich von der Sphäre und dem Zylinder der Vorderseite (2) sowie von der den zweiten Beitrag zu den Variationen von optischer Leistung und Astigmatismus des Glases verursachenden physikalischen Größe unterscheidet.

2. Verfahren nach Anspruch 1, wobei die Werte der physikalischen Größe außerdem so bestimmt werden, dass für die zwischen einem Fernsichtpunkt (VL) und einem Nahsichtpunkt (VP) des Glases vorhandene Variation optischer Leistung der zweite Beitrag in Absolutwerten niedriger als der erste Beitrag ist.

3. Verfahren nach Anspruch 2, wobei die Werte der physikalischen Größe außerdem so bestimmt werden, dass für die zwischen dem Fernsichtpunkt (VL) und dem Nahsichtpunkt (VP) des Glases vorhandene Variation optischer Leistung der zweite Beitrag im Wesentlichen Null ist.

4. Verfahren nach einem der Ansprüche 1 bis 3, wobei die Modulation der physikalischen Größe außerdem so bestimmt wird, dass der zweite Beitrag zu den Variationen von optischer Leistung und Astigmatismus des Glases ein Nahsichtfeld und/oder ein Fernsichtfeld des Glases bezüglich eines fiktiven Nahsichtfelds und/oder eines fiktiven Fernsichtfelds vergrößert, das nur aus dem ersten Beitrag resultiert.

5. Verfahren nach einem der Ansprüche 1 bis 4, wobei die Modulation der physikalischen Größe außerdem so bestimmt wird, dass der zweite Beitrag zu den Astigmatismusvariationen des Glases einen maximalen Astigmatismuswert, der an einem in Seitenbereichen des Glases befindlichen Punkt erreicht wird, und/oder eine Position des Punkts bezüglich eines maximalen fiktiven Astigmatismuswerts und/oder einer fiktiven Position ändert, die nur aus dem ersten Beitrag resultieren.

6. Verfahren nach einem der Ansprüche 1 bis 5, wobei die Modulation der physikalischen Größe außerdem so bestimmt wird, dass der zweite Beitrag zur Variation optischer Leistung des Glases einen Verlauf der optischen Leistung des Glases entlang einer Mittellinie (M) zwischen einem Fernsichtpunkt (VL) und einem Nahsichtpunkt (VP) des Glases bezüglich eines fiktiven Verlaufs der optischen Leistung zwischen den Punkten ändert, der nur aus dem ersten Beitrag resultiert.

7. Verfahren nach einem der Ansprüche 1 bis 6, wobei die Modulation der physikalischen Größe außerdem so bestimmt wird, dass der zweite Beitrag zu den Variationen von optischer Leistung und Astigmatismus des Glases seitlich einen Nahsichtpunkt des Glases (VP) bezüglich einer fiktiven Position des Punkts verschiebt, die nur aus dem ersten Beitrag resultiert.

## Claims

1. Process for producing a progressive ophthalmic lens (10) comprising an anterior face (2), a posterior face (3) and an intermediate medium (1), the process comprising the following steps:
- producing a semi-finished lens in which the anterior face (2) comprises variations in sphere and in cylinder so as to obtain a first contribution to variations in optical power and in astigmatism of the lens during use of said lens by a wearer;
- measuring at least one behavioural characteristic of a wearer of the lens;
- determining values of a physical quantity of the lens, which physical quantity is distinct from the sphere and from the cylinder of the anterior face, so that a second contribution to the variations in optical power and in astigmatism of the lens results from variations in said physical quantity between different points of the lens, said second contribution realizing a personalization of the variations in optical power and in astigmatism of the lens dependent on the measured behavioural characteristic, and
- modulating the physical quantity to obtain said second contribution;
in which
the physical quantity comprises a sphere and a cylinder of the posterior face of the lens (3), and said physical quantity is modulated during machining carried out to rework the posterior face of the lens, or
the physical quantity comprises a refractive index of a substantially transparent layer (4) comprised in the semi-finished lens, said layer being made of a material the refractive index of which is adjustable by irradiation, and said physical quantity is modulated by selectively irradiating various segments of said layer variably, or
said physical quantity comprises a refractive index of the intermediate medium of the lens (1), said intermediate medium being made of a material the refractive index of which is adjustable by irradiation, and said physical quantity is modulated by selectively irradiating various segments of the intermediate medium variably,
the process further comprising the following step:
- determining values of another physical quantity at various points of the lens with a view to endowing the lens with a prescription optical power and a prescription astigmatism,
in which
said other physical quantity comprises a sphere and a cylinder of the posterior face of the lens (3), and said other physical quantity is modulated during machining carried out to rework the posterior face of the lens, or said other physical quantity comprises a refractive index of a substantially transparent layer (4) comprised in the lens, said layer being made of a material the refractive index of which is adjustable by irradiation, and said other physical quantity is modulated by selectively irradiating various segments of said layer variably, or said other physical quantity comprises a refractive index of the intermediate medium of the lens (1), said intermediate medium being made of a material the refractive index of which is adjustable by irradiation, and said other physical quantity is modulated by selectively irradiating various segments of the intermediate medium variably,
**characterized in that** the behavioural characteristic comprises an amplitude of horizontal eye movements with respect to a rotation of the head of the wearer, when the wearer scans a field of vision horizontally,
and **in that** said other physical quantity is distinct from the sphere and from the cylinder of the anterior face (2), and from the physical quantity from which the second contribution to the variations in optical power and in astigmatism of the lens is derived.

2. Process according to Claim 1, wherein the values of the physical quantity are furthermore determined so that, for the variation in optical power present between a far-vision point (VL) and a near-vision point (VP) of the lens, the second contribution is lower than the first contribution, in absolute values.

3. Process according to Claim 2, wherein the values of the physical quantity are furthermore determined so that, for the variation in optical power present between the far-vision point (VL) and the near-vision point (VP) of the lens, the second contribution is substantially zero.

4. Process according to any one of Claims 1 to 3, wherein the modulation of the physical quantity is further determined so that the second contribution to the variations in optical power and in astigmatism of the lens broadens a near-vision field and/or a far-vision field of the lens, with respect to a fictional near-vision field and/or a fictional far-vision field, respectively, resulting from the first contribution alone.

5. Process according to any one of Claims 1 to 4, wherein the modulation of the physical quantity is furthermore determined so that the second contribution to the variations in astigmatism of the lens modifies a maximum astigmatism value reached at a point located in lateral portions of the lens and/or a position of said point, with respect to a fictional maximum astigmatism value and/or a fictional position, respectively, resulting from the first contribution alone.

6. Process according to any one of Claims 1 to 5, wherein the modulation of the physical quantity is further determined so that the second contribution to the variation in optical power of the lens modifies a progression of the optical power of the lens along a meridian line (M) between a far-vision point (VL) and a near-vision point (VP) of the lens, with respect to a fictional progression of the optical power between said points resulting from the first contribution alone.

7. Process according to any one of Claims 1 to 6, wherein the modulation of the physical quantity is furthermore determined so that the second contribution to the variations in optical power and in astigmatism of the lens moves laterally a near-vision point (VP) of the lens, with respect to a fictional position of said point resulting from the first contribution alone.
